# EUROPEAN PATENT APPLICATION

(11) **EP 4 765 572 A1**
(43) Date of publication of application: **24.06.2026**
(21) Application number: 25223369.7
(22) Date of filing: 15.12.2025
(51) Int. Cl.: H02J 7/40, G06F 13/00, G08C 17/02, H01M 10/42, H01M 10/48

(54) **BATTERY COMMUNICATION SYSTEM AND OPERATION METHOD THEREOF**

(30) Priority: 17.12.2024 TW 113149127
(71) Applicant: Grace Connection Microelectronics Limited, Zhubei City 302052 (TW)
(72) Inventor: CHEN, Pei Wei, 302052 Zhubei City (TW); CHEN, Hsien-Ku, 302052 Zhubei City (TW)
(74) Representative: Viering, Jentschura & Partner mbB Patent- und Rechtsanwälte

(57) **Abstract**

A battery communication system and an operation method thereof are provided. The battery communication system is used to communicate with a plurality of battery units. The operation method of the battery communication system includes the following steps: in a wireless daisy-chain communication path of the battery communication system, a first wireless communication unit sends a transmission signal to a second wireless communication unit adjacent thereto via a wireless communication or a coupling wave; and in the wireless daisy-chain communication path of the battery communication system, the first wireless communication unit and the second wireless communication unit operate an auto-gain control (AGC) to enable the second wireless communication unit to automatically adjust its receiving gain, or an auto-power control (APC) to automatically adjust an output power of the first wireless communication unit.

## Description

### CROSS REFERENCE

The present invention claims priority to TW113149127 filed on December 17, 2024.

### BACKGROUND OF THE INVENTION

### Field of Invention

The present invention relates to a communication system and an operating method thereof, and more particularly to a battery communication system and its operating method.

### Description of Related Art

In order to improve the efficiency of battery energy storage systems, the common batteries for industrial and automotive energy storage applications are primarily configured in a series arrangement. As the number of batteries connected in series increases, the DC voltage across the batteries also increases. However, it is important for the battery energy storage system to monitor and collect information such as the voltage and temperature of each individual battery to ensure operational performance and safety. As the series-connected DC voltage increases, the voltage difference across the batteries managed by the battery communication system also increases, which brings challenges to the safety and stability of the battery communication system.

In the widespread use of lithium iron phosphate (LiFePO₄) batteries, which have a relatively flat discharge curve (low slope curve with low parameter variation per unit time or cycle), and the energy capacity of a single cell can range between a few ampere-hours (2-3Ah) and several hundred ampere-hours (200-300Ah). Especially, the battery energy storage systems require more precise monitoring capabilities for these relatively flat discharge curves of the batteries. There is a current trend in such systems to associate each battery with a dedicated monitoring chip.

The monitoring data of these batteries can be sent back through a communication path to track the operating status of each battery. Therein, every node along the communication path must be operational to keep the communication path working. A communication failure at any one node may significantly decrease the communication efficiency of the battery system.

### SUMMARY OF THE INVENTION

In view of the aforementioned technical needs, the present invention relates to a battery communication system and an operating method thereof. The battery communication system may utilize an auto-power control (APC) procedure or an auto-gain control (AGC) procedure to ensure that each communication node in a wireless daisy-chain communication path operates properly, thereby maintaining the communication efficiency of the battery communication system.

According to one perspective of the present invention, an operating method of the battery communication system is provided. The battery communication system is used to enable communication among a plurality of battery units. The operating method of the battery communication system includes: in a wireless daisy-chain communication path of the battery communication system, a first wireless communication unit sends a transmission signal to an adjacent second wireless communication unit via wireless transmission or coupling wave; in the wireless daisy-chain communication path of the battery communication system, the first wireless communication unit and the second wireless communication unit operate an auto-power control (APC) procedure to enable the second wireless communication unit to automatically adjust its receiving gain to automatically adjust an output power of the first wireless communication unit, or an auto-gain control (AGC) procedure to enable the second wireless communication unit to automatically adjust its receiving gain.

According to another perspective of the present invention, a battery communication system is provided. The battery communication system includes a first wireless communication unit and a second wireless communication unit. The first wireless communication unit is connected in a wireless daisy-chain communication path, and the second wireless communication unit is also connected in the wireless daisy-chain communication path and adjacent to the first wireless communication unit. Within the wireless daisy-chain communication path of the battery communication system, the first wireless communication unit may send a transmission signal to the adjacent second wireless communication unit via wireless transmission or coupling wave. The first and second wireless communication units are configured to operate an auto-power control (APC) procedure to automatically adjust an output power of the first wireless communication unit, or an auto-gain control (AGC) procedure to enable the second wireless communication unit to automatically adjust its receiving gain.

Regarding the objectives, technical details, features, and benefits of the present invention, exemplary embodiments are described in detail below for a better understanding of the above and other aspects of the present invention, with reference to the associated drawings.

### BRIEF DESCRIPTION OF THE DRAWINGS

FIG. 1 illustrates a schematic diagram of a battery system according to one embodiment of the present invention.
FIG. 2 illustrates a diagram based on the communication method of the wireless daisy-chain communication path according to one embodiment of the present invention.
FIG. 3 illustrates a diagram based on the communication method of a wireless daisy-chain communication path according to another embodiment of the present invention.
FIG. 4 illustrates a flowchart based on the operating method of the battery communication system according to one embodiment of the present invention.
FIG. 5 illustrates a detailed flowchart illustrating step S300 of one embodiment of the present invention.
Figs. 6A to 6C illustrate diagrams exemplifying steps S310 and S320.
FIG. 7 illustrates a detailed flowchart based on step S300 according to another embodiment of the present invention.
Figs. 8A to 8C illustrate diagrams based on steps S330, S340, and S350.
FIG. 9 illustrates a detailed flowchart based on step S300 according to yet another embodiment of the present invention.
Figs. 10A to 10C are diagrams exemplifying steps S360, S370, and S380.
Fig. 11 illustrates a flowchart showing the details of a step S200 according to one embodiment of the present invention.
Figs. 12A to 12B respectively illustrate the steps S100, S210, S220, and S230 according to one embodiment of the present invention.
Fig. 13 illustrates a flowchart detailing the step S200 according to one embodiment of the present invention.
Figs. 14A to 14B respectively illustrate steps S100, S240, S250, and S260 according to one embodiment of the present invention.

### DESCRIPTION OF THE PREFERRED EMBODIMENTS

The technical wordings/terms in this specification are based on a customary understanding of the art. In this specification, the interpretations of these wordings/terms are preferentially based on the description or the definition in this specification. Each embodiment of the present invention includes at least one technical feature. To the extent possible, a person having ordinary knowledge in the art may, as needed, select, combine, or modify some or all of the technical features in any one of the embodiments, within the spirit and scope of the present invention.

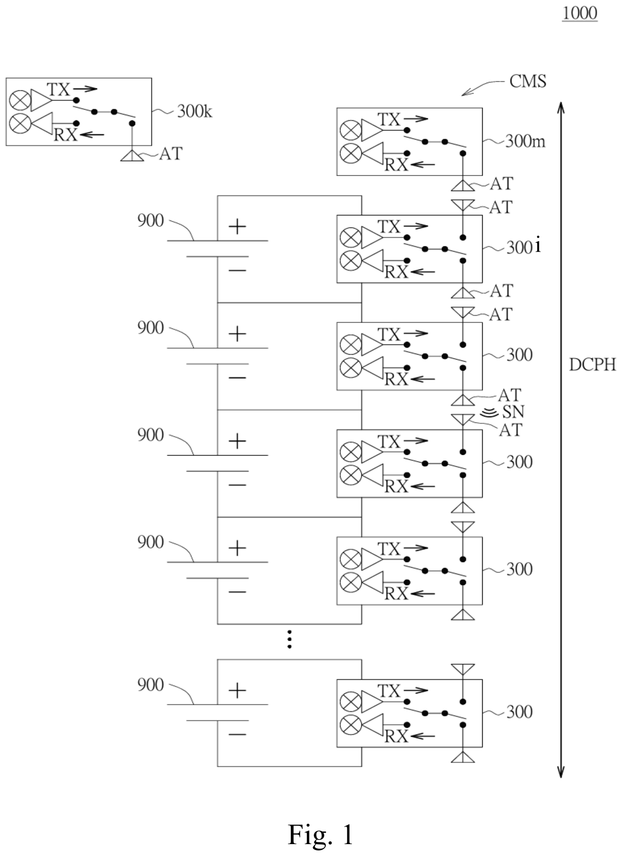

Please refer to FIG. 1, which illustrates a schematic diagram of a battery system 1000 according to one embodiment of the present invention. The battery system 1000 includes a plurality of battery units 900 and a battery communication system CMS. The battery communication system CMS may include a master wireless communication unit 300m and a plurality of wireless communication units 300. The battery communication system CMS is connected to the battery units 900. Each of the battery units 900 may be, for example, a lithium iron phosphate battery or a ternary lithium battery. These battery units 900 may be connected in series. During operation, the battery units 900 must be monitored to ensure that battery parameters such as temperature and voltage remain within acceptable/operable ranges. In particular, when lithium iron phosphate batteries are used, their relatively flat or smooth discharge curves require each battery unit 900 to be equipped with a monitoring chip or circuit (not shown) for precise monitoring.

The battery communication system CMS facilitates communication among the battery units 900, such as sending monitoring information or control commands in transmission signals SN. The monitoring information may include voltage, temperature, or current data of the batteries. The master wireless communication unit 300m, can control, collect, or send information of, the wireless communication units. The wireless coupling elements AT are disposed on corresponding facing positions between the adjacent wireless communication units 300, or on corresponding facing positions between the first wireless communication unit 300i and the master wireless communication unit 300m, for whisper communication. Communication between the master wireless communication unit 300m and each of the wireless communication unit 300 is performed sequentially through the wireless coupling elements AT via wireless transmission or coupling wave in a whisper wireless communication manner, for sending control commands or receiving monitoring information. The wireless communication units 300 and the master wireless communication unit 300m form (or, are connected in) a wireless daisy-chain communication path (DCPH), which may be a communication chain path configuration or a communication ring path configuration.

In one embodiment, the whisper wireless communication connected via the wireless coupling elements AT enables secret communication only affective between the adjacent wireless communication units 300 (or between the first wireless communication unit 300i and the master wireless communication unit 300m), without interfering with, or being affected by, other wireless communication units 300.

Each of the wireless communication units 300 and the master wireless communication unit 300m may include a transmission circuit TX and a receiving circuit RX, respectively, for sending signals and receiving signals. In the wireless daisy-chain communication path DCPH, each of the wireless communication units 300 can maintain stable operation for receiving the transmission signal SN to ensure continuous propagation of the transmission signal SN through the wireless daisy-chain communication path.

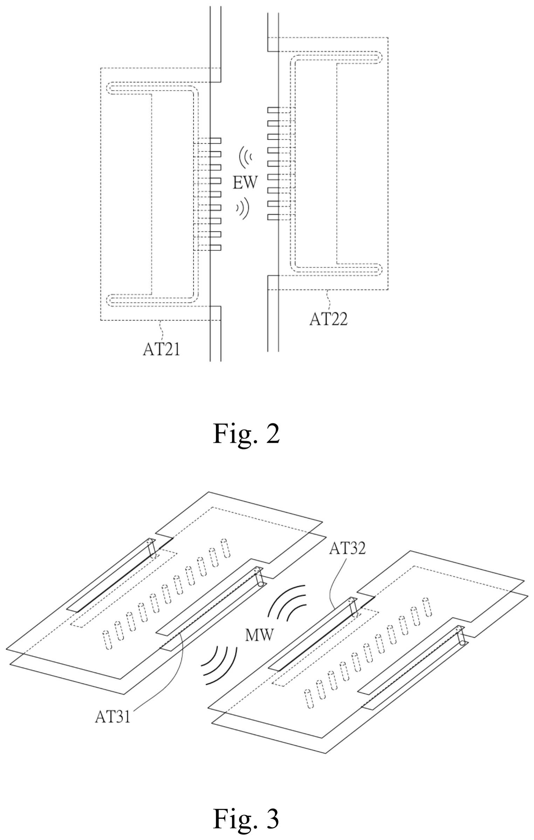

Please refer to one embodiment as shown in FIG. 2, which illustrates a communication method of a wireless daisy-chain communication path DCPH according to one embodiment of the present invention. As shown in FIG. 2, in the wireless daisy-chain communication path DCPH, the wireless coupling elements AT21 and AT22 may communicate or perform wireless coupling via electronic coupling wave (EW).

Please refer to FIG. 3, which illustrates a communication method of a wireless daisy-chain communication path DCPH according to another embodiment of the present invention. As shown in FIG. 3, in the wireless daisy-chain communication path DCPH, the wireless coupling elements AT31 and AT32 may communicate or perform wireless coupling via magnetic coupling waves (MW).

In one embodiment, the wireless coupling elements AT described above, may include the wireless coupling elements AT21 and AT22 in FIG. 2, or include the wireless coupling elements AT31 and AT32 in FIG. 3.

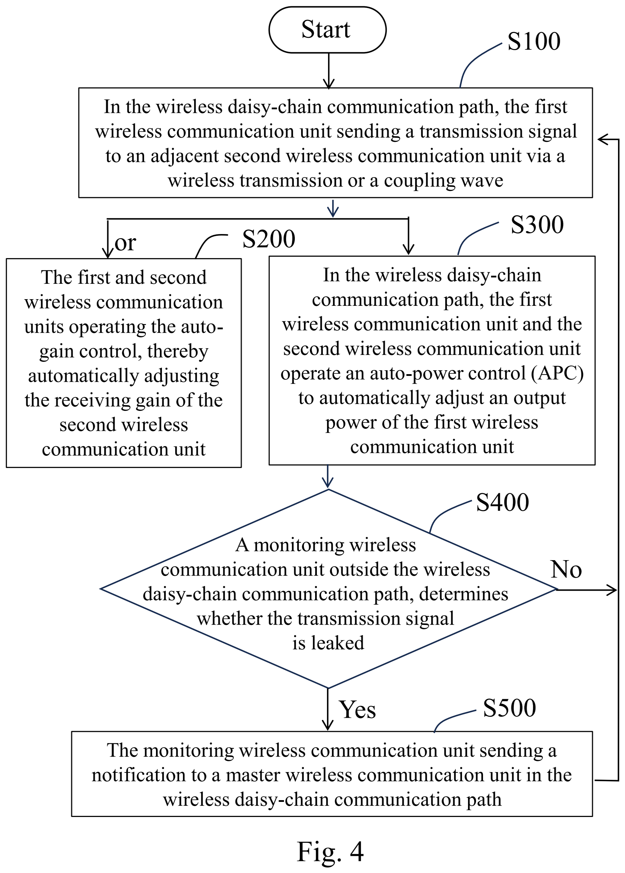

Please refer to one embodiment as shown in FIG. 4, which illustrates a flowchart of an operating method for the battery communication system CMS according to one embodiment of the present invention. The method includes steps S100 to S500.

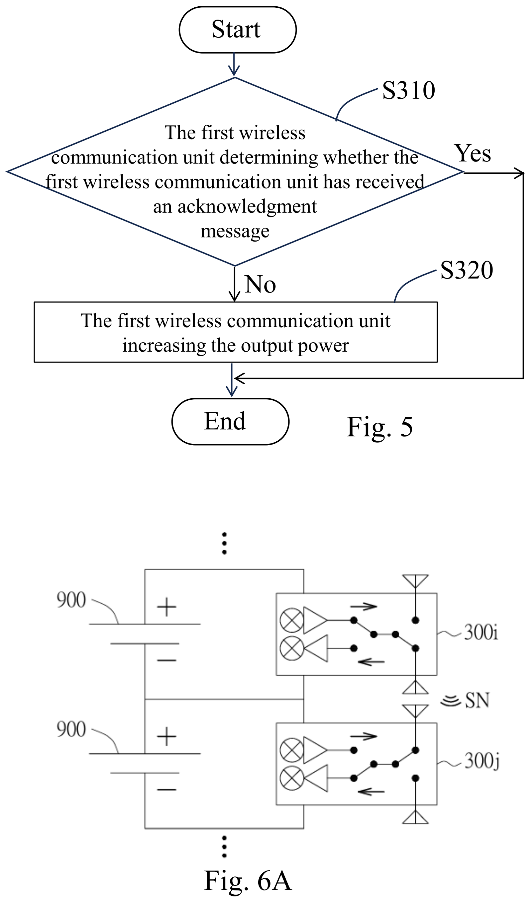

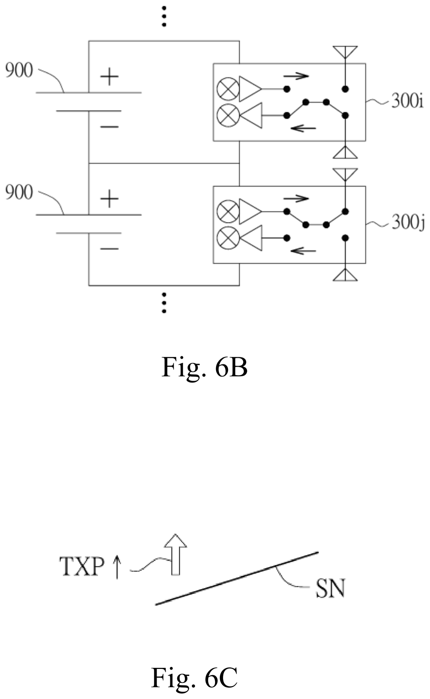

According to one embodiment, in step S100, in the wireless daisy-chain communication path DCPH of the battery communication system CMS, the first wireless communication unit 300i sends the transmission signal SN to an adjacent second wireless communication unit 300j via an electronic coupling wave (as shown in FIG. 2) or a magnetic coupling wave (as shown in FIG. 3). The first and second wireless communication units 300i and 300j (as shown in Figs. 6A and 6B), are two adjacent wireless communication units among the multiple wireless communication units 300. The disposition sequence of the first and second wireless communication units is interchangeable. The present invention dose not limit disposition sequence of the first and second wireless communication units.

Please refer to Figs. 5 and 6A-6C, wherein FIG. 5 shows a detailed flowchart of step S300, which may include steps S310-S320. Figs. 6A to 6C, respectively, depict the operations of steps S310 and S320.

In step S300, as shown in Figs. 6A to 6C, the first and second wireless communication units 300i and 300j operate an auto-power control (APC) procedure to automatically adjust the output power TXP of the first wireless communication unit 300i.

In detail, the step S300 may include, for example, steps S310 to S320. In step S310, as illustrated in FIG. 6B, the first wireless communication unit 300i determines whether the first wireless communication unit 300i has received an acknowledgment message from the second wireless communication unit 300j. When the output power TXP of the first wireless communication unit 300i is sufficiently high, the second wireless communication unit 300j can receive the transmission signal SN and feedback the acknowledgment message to the first wireless communication unit 300i. When the output power TXP of the first wireless communication unit 300i is not high enough, the second wireless communication unit 300j cannot receive the transmission signal SN and thus cannot feedback the acknowledgment message. When the first wireless communication unit 300i does not receive the acknowledgment message from the second wireless communication unit 300j, it proceeds to step S320. In the example shown in FIG. 6B, the first wireless communication unit 300i does not receive the acknowledgment message, indicating that the output power TXP of the first wireless communication unit 300i is not high enough and the transmission signal SN cannot be correctly delivered.

In step S320, as shown in FIG. 6C, the wireless communication unit 300 increases the output power TXP, thereby attempting to successfully send the transmission signal SN to the second unit 300j.

In one embodiment, the first wireless communication unit 300i increases the output power TXP by a predetermined fixed increment. After adjustment of the output power TXP, it proceeds to steps S400 and S500, and returns back to step S100 to operate the APC procedure again. When no acknowledgment message is received, the output power is further increased by the predetermined fixed increment until the acknowledgment message is received.

In another embodiment, the first wireless communication unit 300i increases the output power TXP by a predetermined proportion. After the output power TXP is adjusted, it proceeds to steps S400 and S500, and then returns to step S100 to operate the auto-power control procedure again. When the first wireless communication unit 300i still does not receive the acknowledgment message, the output power TXP will be further increased by the predetermined proportion until the acknowledgment message is received by the first wireless communication unit 300i.

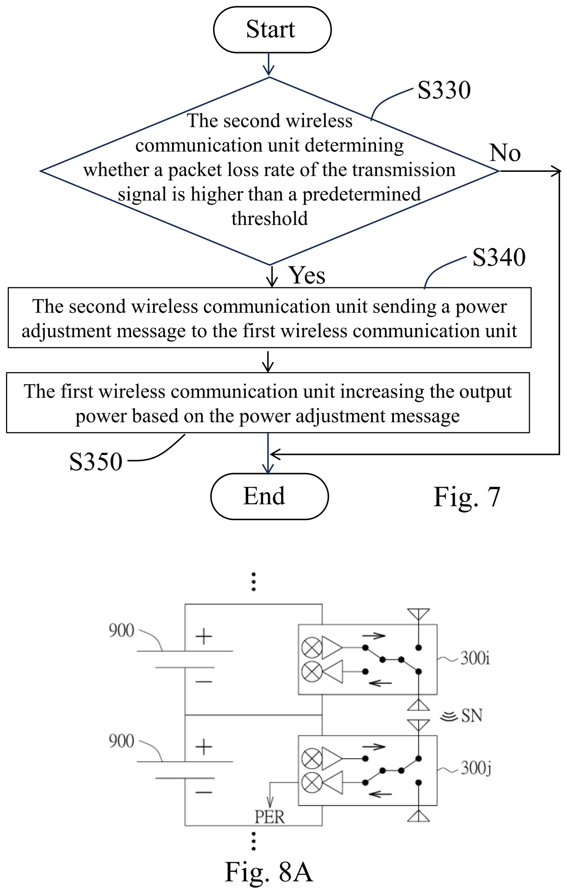

Please refer to Figs. 7 and 8A-8C. FIG. 7 illustrates a detailed flowchart of step S300 in another embodiment, wherein the step S300 includes steps S330-S350. Figs. 8A-8C respectively depict the operations of these steps S330-S350.

As shown in Figs. 8A-8C, in the wireless daisy-chain communication path DCPH of the battery communication system CMS, the first and second wireless communication units 300i and 300j, in the step S300, operate the APC procedure to automatically adjust the output power TXP of the first wireless communication unit 300i.

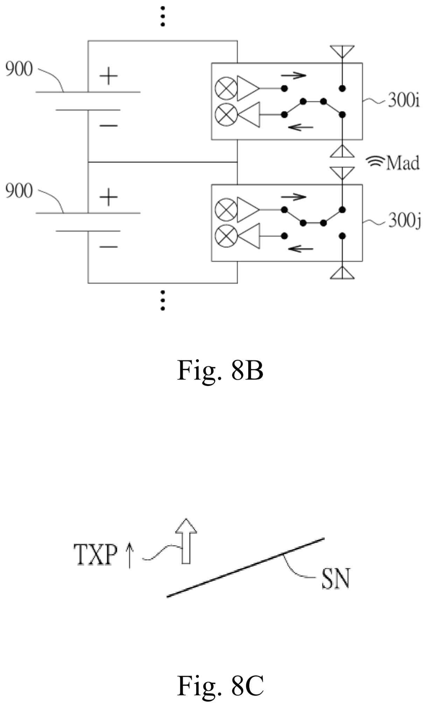

Specifically, the step S300 may include, for example, steps S330 to S350. In the step S330, as illustrated in FIG. 8B, the second wireless communication unit 300j determines whether a packet loss rate PER of the transmission signal SN is higher than a predetermined threshold. When the output power TXP of the first wireless communication unit 300i is sufficiently high, the second wireless communication unit 300j may receive the transmission signal SN correctly, but the signal reception may possibly be affected by stronger interference signals, resulting in an excessively high packet loss rate PER. When the packet loss rate PER exceeds the predetermined threshold, it proceeds to step S340. In the example shown in FIG. 8A, the packet loss rate PER is higher than the predetermined threshold.

In step S340, as shown in FIG. 8B, the second wireless communication unit 300j sends a power adjustment message Mad to the first wireless communication unit 300i.

Then, in step S350 (Figs. 7 and 8C), the first wireless communication unit 300i increases its output power TXP based on the power adjustment message MAD. In one embodiment, this is done by the predetermined fixed increment. The process goes through S400 and S500 and back to S100 to re-operate the auto-power control (APC) procedure. When the packet loss rate PER is still higher than the predetermined threshold, the output power TXP will be increased again by the predetermined fixed increment until the packet loss rate PER is no higher than the predetermined threshold.

In another embodiment, the first wireless communication unit 300i increases the output power TXP by the predetermined proportion. After the output power TXP is adjusted, it proceeds to steps S400 and S500 to operate the auto-power control procedure again. When the packet loss rate PER remains higher than a predetermined threshold, the output power TXP is increased again by the predetermined proportion until the PER is not higher than the predetermined threshold.

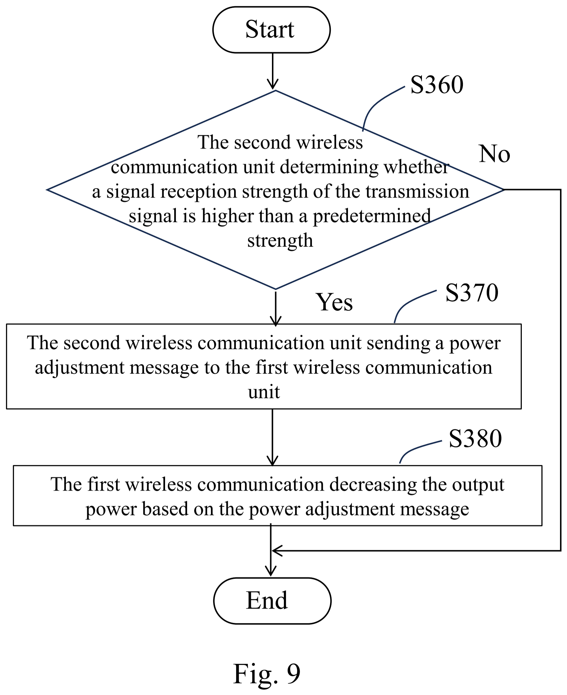

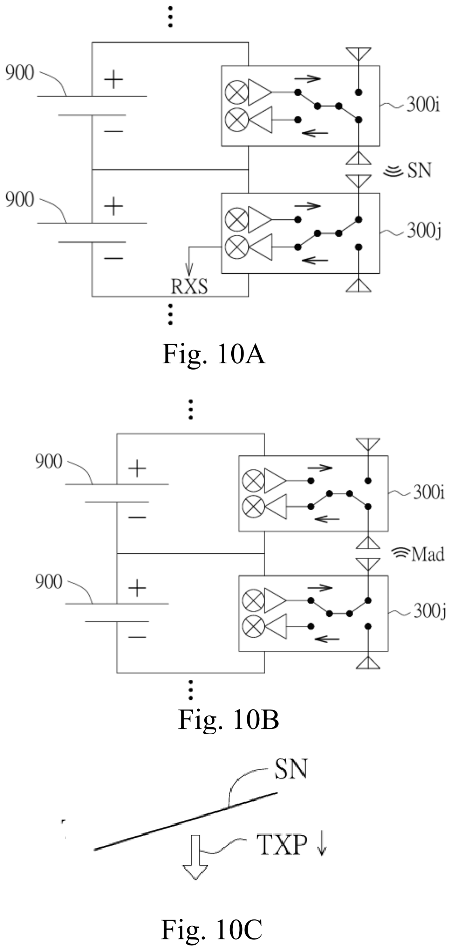

Please refer to FIG. 9 and 10A-10C. FIG. 9 shows a detailed flowchart of step S300 in yet another embodiment, wherein the step S300 includes steps S360-S380 respectively illustrated in Figs. 10A-10C.

In step S300, as shown in Figs. 10A to 10C, the first wireless communication unit 300i and the second wireless communication unit 300j operate the auto-power control in the wireless daisy-chain communication path DCPH of the battery communication system CMS, in order to automatically adjust the output power TXP of the first wireless communication unit 300i.

In detail, the step S300 may include, for example, steps S360 to S380. In step S360, as shown in FIG. 10B, the second wireless communication unit 300j determines whether the signal reception strength RXS of the transmission signal SN exceeds a predetermined strength. When the output power TXP of the first wireless communication unit 300i is too high, the second wireless communication unit 300j may receive the transmission signal SN, but it may exceed the operable range of its receiving circuit RX. When the signal reception strength RXS exceeds the predetermined strength, it proceeds to step S370. In the example shown in FIG. 10A, the signal reception strength RXS is higher than the predetermined strength.

In step S370, as shown in FIG. 10B, the second wireless communication unit 300j sends the power adjustment message Mad to the first wireless communication unit 300i.

Then, in step S380, as shown in FIG. 10C, the first wireless communication unit 300i decreases the output power TXP based on the power adjustment message Mad. In one embodiment, the first wireless communication unit 300i decreases the output power TXP by the predetermined fixed increment. After the output power TXP is adjusted, it proceeds to steps S400 and S500, and then returns to step S100 to operate the auto-power control procedure again. When the signal reception strength RXS remains higher than the predetermined strength, the output power TXP will be further decreased by the predetermined fixed increment until the signal reception strength RXS is no longer higher than the predetermined strength.

In another embodiment, the first wireless communication unit 300i, for example, decreases the output power TXP by a predetermined proportion. After adjusting the output power TXP, it proceeds to steps S400 and S500, and then returns to step S100 to operate the auto-power control again. If the signal reception strength RXS is still higher than the predetermined strength, the output power TXP will be decreased again by the predetermined proportion, until the signal reception strength RXS is no longer higher than the predetermined strength.

After the auto-power control APC procedure, it proceeds to the steps S400-S500 of FIG. 4. In the step S400, as shown in FIG. 1, a monitoring wireless communication unit 300k outside the wireless daisy-chain communication path DCPH, determines whether the transmission signal SN is leaked. The Whisper communication should be received merely by adjacent wireless communication units. When the unit 300k receives the transmission signal SN, it indicates signal leakage and then proceeds the step S500.

In step S500, the monitoring wireless communication unit 300k sends a notification to the master wireless communication unit 300m. This process may apply common wireless communication technology rather than the whisper communication of the present invention.

During the above steps, the increase and decrease in output power TXP by the auto-power control procedure may be substantially different, e.g., different fixed increments or different predetermined proportions.

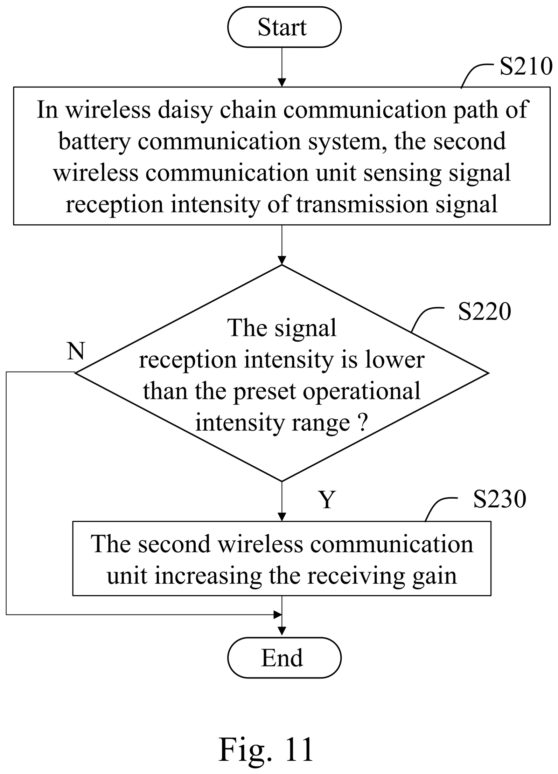

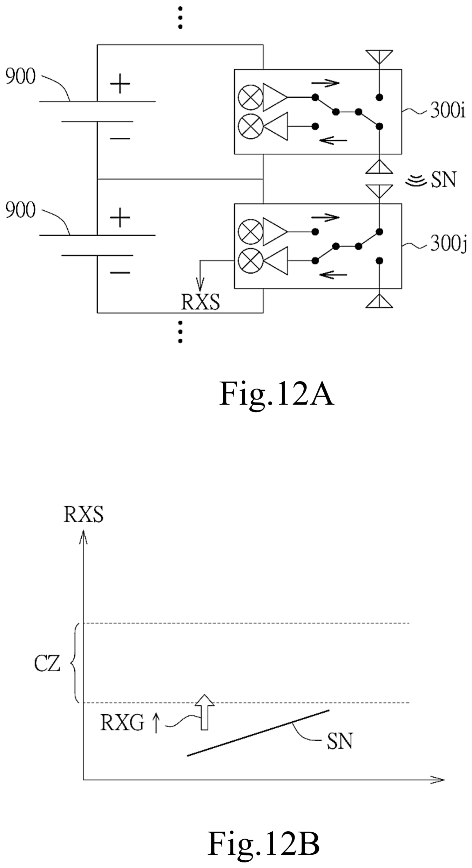

As shown in Fig. 4, the operation method of the battery communication system CMS further includes S200 after step S100, as shown in Figs. 11, and 12A to 12B together. The step S200 includes, for example, the steps S210 to S230. Figs. 12A to 12B illustrate the steps S210, S220, and S230.

Regarding the step S100, please refer to Fig. 12A, wherein in the wireless daisy chain communication path DCPH of the battery communication system CMS, the communication unit 300i sends the transmission signal SN to the adjacent second wireless communication unit 300j via the electric coupling wave EW (shown in Fig. 2), the magnetic coupling wave MW (shown in Fig. 3) or other wireless signal transmissions. The first wireless communication unit 300i and the second wireless communication unit 300j are two adjacent wireless communication units among the multiple wireless communication units 300 described above. Then, regarding the step S200, please refer to Fig. 12B, wherein the first wireless communication unit 300i and the second wireless communication unit 300j operate an auto-gain control (AGC) to automatically adjust the receiving gain of the second wireless communication unit 300j.

In detail, the step S200 includes, the steps S210 to S230, for example. In the step S210, as shown in Fig. 12A, the second wireless communication unit 300j senses the signal reception intensity RXS of the transmission signal SN. Regarding the step S220, please refer to Fig. 12B, wherein the second wireless communication unit 300j evaluates whether the signal reception intensity RXS is lower than a preset operational intensity range CZ. When the signal reception intensity RXS is too low and the receiving circuit RX cannot correctly decode the transmission signal SN, and the content of the transmission signal SN may be lost. That is, when the signal reception intensity RXS is evaluated to be lower than the preset operational intensity range CZ, it proceeds to the step S230. Therein, when the signal reception intensity is lower than the preset operational intensity range CZ, it may indicate insufficient signal strength for optimal communication capability.

In the step S230, as shown in Fig. 12B, the second wireless communication unit 300j increases the receiving gain RXG, to adjust the receiving gain RXG to enter the preset operational intensity range CZ. In one embodiment, the second wireless communication unit 300j increases the receiving gain RXG, for example, based on a preset absolute magnitude (or, with a preset absolute magnitude). After adjusting the receiving gain RXG, the flow can return to the steps S100 and S200 to re-operate the automatic gain control. When the receiving gain RXG remains lower than the preset operational intensity range CZ, the receiving gain RXG is increased (or, incrementally increased) based on the preset absolute magnitude, until receiving gain RXG reaches the preset operational range CZ.

In another embodiment, the second wireless communication unit 300j, for example, increases the receiving gain RXG based on a preset proportional factor. After adjusting the receiving gain RXG, it can return to the step S100 and the step S200 to re-operate the automatic gain control. When the receiving gain RXG is still lower than the preset operational intensity range CZ, it re-operates the auto-gain control of the step S100 and the step S200, wherein the receiving gain RXG can be increased (or, incrementally increased) based on the preset proportional factor, until the receiving gain RXG is within the preset operational range CZ.

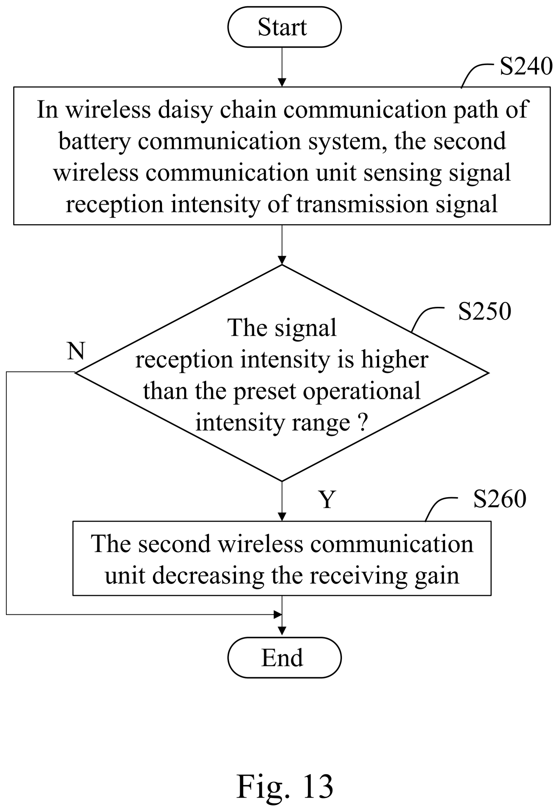

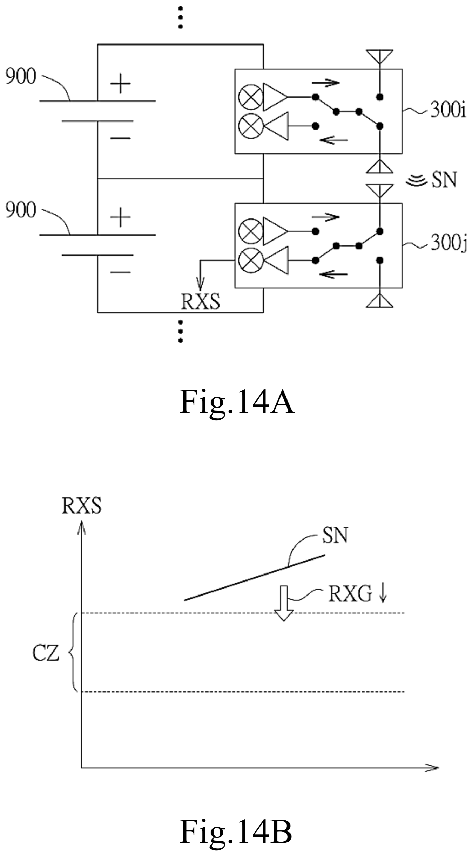

Please refer to Figs. 13, and 14A to 14B. Fig. 13 illustrates a detail flowchart of the step S200 according to another embodiment of the present invention, wherein the step S200 includes the steps S240 to S260, for example. Figs. 14A to 8B illustrate the steps S100, S240, S250, and S260.

Regarding the step S100, please refer to Fig. 14A, wherein in the wireless daisy chain communication path DCPH of the battery communication system CMS, the first wireless communication unit 300i sends a transmission signal SN to the adjacent second wireless communication unit through an electric coupling wave EW (shown in Fig. 2), a magnetic coupling wave MW (shown in Fig. 3) or a wireless signal transmission.

Next, please refer to Fig. 14B, wherein in the step S200, the first wireless communication unit 300i and the second wireless communication unit 300j operate the auto-gain control, thereby automatically adjusting the receiving gain RXG of the second wireless communication unit 300j.

For example, please refer to Fig. 14A, wherein the step S200 includes the steps S240 to S260. In the step S240, the second wireless communication unit 300j senses the signal reception intensity RXS of the transmission signal SN.

Then, regarding the step S250, please refer to Fig. 14B, wherein the second wireless communication unit 300j evaluates whether the signal reception intensity RXS is higher than the preset operational intensity range CZ. When the signal reception intensity RXS is too high, it may exceed an upper limit of the receiving circuit RX that can result in the inability to correctly decode the transmission signal SN, and potentially cause data loss. When the signal reception intensity RXS is higher than the preset operational intensity range CZ, the process proceeds to the step S260.

Regarding the step S260, please refer to Fig. 14B, wherein the second wireless communication unit 300j decreases the receiving gain RXG for adjusting it into the preset operational intensity range CZ. In one embodiment, the second wireless communication unit 300j decreases the receiving gain RXG, for example, based on the preset absolute magnitude. After adjusting the receiving gain RXG, the process can return to the steps S100 and S200 to re-execute the auto-gain control procedure. When the receiving gain RXG remains higher than the preset operational intensity range CZ, the receiving gain RXG will be reduced again with the preset absolute magnitude until the receiving gain RXG is not higher than (or, falls within) the preset operational intensity range CZ.

In one embodiment, the second wireless communication unit 300j decreases the receiving gain RXG based on the preset proportional factor, for example, by applying a predefined scaling coefficient. After adjusting the receiving gain RXG, the process returns to the steps S100 and S200 to re-execute the auto-gain control procedure. When the receiving gain RXG remains higher than the preset operational intensity range CZ, the receiving gain RXG will be further reduced based on a preset proportional factor until the receiving gain RXG is not higher than (or, falls within) the preset operational intensity range CZ.

In one embodiment, the step S200 includes, for example, the steps S210 to S260 as described above, ensuring that when the receiving gain RXG does not fall within the preset operational intensity range CZ, the receiving gain RXG can be adjusted to be within the preset operational intensity range CZ by the aforementioned increasing and/or reducing operation of the receiving gain RXG.

During the operation described in the above-described embodiments, absolute adjustments for increasing and decreasing the receiving gains RXG may be substantially different (e.g., different preset absolute magnitudes or different preset proportional factors). In another point of view, the absolute adjustments for increasing and decreasing the receiving gains RXG may exhibit distinctly different effects on the system's performance. However, in another embodiment, the absolute adjustments for increasing and decreasing the receiving gain may be effectively equivalent to each other, if feasible.

There are a plurality of the wireless communication units 300 coupled to each other in the wireless daisy chain communication path DCPH, wherein the wireless communication units 300 may experience different levels of attenuation and degradation over the working time. After operating for a period of time, the wireless communication units 300 along the wireless daisy chain communication path DCPH may exhibit multiple receiving gains RXG that are not entirely identical to each other (or, the receiving gains RXG of the wireless communication units 300, exhibit slight differences from each other).

The wireless communication units 300 through the wireless daisy-chain communication path DCPH, may degrade differently after a long-term working time. Consequently, their suitable output powers TXP of the wireless communication units 300 may not become completely equivalent. According to the above embodiments, the battery communication system CMS can apply the APC procedure or AGC procedure to ensure reliable operation of each communication node along the wireless daisy-chain communication path DCPH and maintain communication efficiency of the wireless daisy-chain communication path DCPH.

The above description discloses distinctive features through several embodiments and/or examples for implementing the features of the present invention. These descriptions are not intended to limit the scope of the present invention. Further, repeated reference symbols or markings may appear in some embodiments for illustrative clarification purposes. Such repetition does not necessarily imply any necessary connection between the described embodiments or configurations. A person skilled in the art to which the present disclosure pertains may make various modifications and adjustments without departing from the spirit and scope of the present disclosure. Accordingly, the scope of protection of the present invention can be defined by the claims.

## Claims

1. An operation method of a battery communication system, for communicating a plurality of battery units, the operation method including:
in a wireless daisy-chain communication path of the battery communication system, a first wireless communication unit sending a transmission signal to a second wireless communication unit adjacent thereto, via a wireless transmission or a coupling wave; and
in the wireless daisy-chain communication path of the battery communication system, the first wireless communication unit and the second wireless communication unit operating an auto-power control (APC) to automatically adjust an output power of the first wireless communication unit, or an auto-gain control (AGC) to automatically adjust a receiving gain of the second wireless communication unit.

2. The operation method of the battery communication system according to claim 1, wherein the auto-power control operated by the first wireless communication unit and the second wireless communication unit, includes:
in the wireless daisy-chain communication path of the battery communication system, the first wireless communication unit determining whether the first wireless communication unit has received an acknowledgment message; and
when the first wireless communication unit does not receive the acknowledgment message, the first wireless communication unit increasing the output power.

3. The operation method of the battery communication system according to claim 2, wherein the first wireless communication unit increases the output power by a predetermined fixed increment, or by a predetermined proportion.

4. The operation method of the battery communication system according to claim 1, wherein the auto-power control operated by the first wireless communication unit and the second wireless communication unit, includes:
in the wireless daisy-chain communication path of the battery communication system, the second wireless communication unit determining whether a packet loss rate of the transmission signal is higher than a predetermined threshold;
when the packet loss rate is higher than the predetermined threshold, the second wireless communication unit sending a power adjustment message to the first wireless communication unit; and
in the wireless daisy-chain communication path of the battery communication system, the first wireless communication unit increasing the output power based on the power adjustment message.

5. The operation method of the battery communication system according to claim 1, wherein the auto-power control operated by the first wireless communication unit and the second wireless communication unit, includes:
in the wireless daisy-chain communication path of the battery communication system, the second wireless communication unit determining whether a signal reception strength of the transmission signal is higher than a predetermined strength;
when the signal reception strength is higher than the predetermined strength, the second wireless communication unit sending a power adjustment message to the first wireless communication unit, and
in the wireless daisy-chain communication path of the battery communication system, the first wireless communication decreasing the output power based on the power adjustment message.

6. The operation method of the battery communication system according to claim 5, wherein the first wireless communication unit decreases the output power by a predetermined fixed increment, or by a predetermined proportion.

7. The operation method of the battery communication system according to claim 1, wherein the auto-gain control operated by the first wireless communication unit and the second wireless communication unit, including:
in the wireless daisy chain communication path of the battery communication system, the second wireless communication unit sensing a signal reception intensity of a transmission signals;
in the wireless daisy chain communication path of the battery communication system, the second wireless communication unit evaluating whether the signal reception intensity is lower than a preset operational intensity range; and
when the signal reception intensity is evaluated to be lower than the preset operational intensity range, the second wireless communication unit increasing the receiving gain, wherein the second wireless communication unit increases the receiving gain based on a preset absolute magnitude, or based on a preset proportional factor.

8. The operation method of the battery communication system according to claim 1, wherein the steps of the auto-gain control operated by the first wireless communication unit and the second wireless communication unit, include:
in the wireless daisy chain communication path of the battery communication system, the second wireless communication unit sensing a signal reception intensity of the transmission signals;
in the wireless daisy chain communication path of the battery communication system, the second wireless communication unit evaluating whether the signal reception intensity is higher than a preset operational intensity range; and
when the signal reception intensity is higher than the preset operational intensity range, the second wireless communication unit decreasing the receiving gain, wherein the second wireless communication unit decreases the receiving gain based on a preset absolute magnitude, or based on a preset proportional factor.

9. The operation method of the battery communication system according to claim 1, further including:
a monitoring wireless communication unit outside the wireless daisy-chain communication path of the battery communication system, determining whether the transmission signal is leaked; and
when the transmission signal is determined to be leaked, the monitoring wireless communication unit sending a notification to a master wireless communication unit in the wireless daisy-chain communication path of the battery communication system.

10. A battery communication system, including:
a first wireless communication unit, connected in a wireless daisy-chain communication path; and
a second wireless communication unit, disposed adjacent to the first wireless communication unit, and connected in the wireless daisy-chain communication path;
wherein, in the wireless daisy-chain communication path, the first wireless communication unit is used to send a transmission signal to the second wireless communication unit adjacent thereto via a wireless transmission or a coupling wave; and
in the wireless daisy-chain communication path of the battery communication system, the first wireless communication unit and the second wireless communication unit operate an auto-power control (APC) to automatically adjust an output power of the first wireless communication unit, or an auto-gain control (AGC) to automatically adjust a receiving gain of the second wireless communication unit.

11. The battery communication system according to claim 10, wherein the auto-power control includes:
the first wireless communication unit determining whether the first wireless communication unit has received an acknowledgment message; and
when the first wireless communication unit does not receive the acknowledgment message, the first wireless communication unit increasing the output power, wherein the first wireless communication unit increases the output power by a predetermined fixed increment, or by a predetermined proportion.

12. The battery communication system according to claim 10, wherein the auto-power control includes:
the second wireless communication unit determining whether a packet loss rate of the transmission signal is higher than a predetermined threshold;
when the packet loss rate is higher than the predetermined threshold, the second wireless communication unit sending a power adjustment message to the first wireless communication unit; and
the first wireless communication unit increasing the output power based on the power adjustment message.

13. The battery communication system according to claim 10, wherein the auto-power control includes:
the second wireless communication unit, determining whether a signal reception strength of the transmission signal is higher than a predetermined strength;
when the signal reception strength is higher than the predetermined strength, the second wireless communication unit sending a power adjustment message to the first wireless communication unit, and
the first wireless communication decreasing the output power based on the power adjustment message, wherein the first wireless communication unit decreases the output power by a predetermined fixed increment, or by a predetermined proportion.

14. The battery communication system according to claim 10, wherein when operating the auto-gain control,
the second wireless communication unit sensing a signal reception intensity of the transmission signal;
the second wireless communication unit evaluating whether the signal reception intensity is lower than a preset operational intensity range; and
when the signal reception intensity is evaluated to be lower than the preset operational intensity range, the second wireless communication unit increasing the receiving gain, wherein the second wireless communication unit increases the receiving gain based on a preset absolute magnitude, or based on a preset proportional factor.

15. The battery communication system according to claim 10, wherein when operating the auto-gain control,
the second wireless communication unit sensing a signal reception intensity of the transmission signal;
the second wireless communication unit evaluating whether the signal reception intensity is higher than a preset operational intensity range; and
when the signal reception intensity is higher than the preset operational intensity range, the second wireless communication unit decreasing the receiving gain, wherein the second wireless communication unit decreases the receiving gain based on a preset absolute magnitude, or based on a preset proportional factor.
